# FASCICULE DE BREVET EUROPEEN

(11) **EP 1 894 350 B1**
(45) Date de publication et mention de la délivrance du brevet: **20.03.2013**
(21) Numéro de dépôt: 06778655.8
(22) Date de dépôt: 23.06.2006
(51) Int. Cl.: H04L 12/24, H04L 29/06

(54) **SECURISATION DE LA TELEPHONIE SUR IP**
SICHERUNG DER IP-TELEFONIE
IP TELEPHONY SECURING

(30) Priorité: 23.06.2005 FR 0506401
(43) Date de publication de la demande: 05.03.2008
(73) Titulaire: CheckPhone Technologies, 92100 Boulogne Billancourt (FR)
(72) Inventeur: KAAS, Gérard, F-78480 Verneuil Sur Seine (FR); CALAIS, Benjamin, F-92340 Bourg La Reine (FR)
(74) Mandataire: Feray, Valérie
(86) Numéro de dépôt international: PCT/FR2006/001456
(87) Numéro de publication internationale: WO 2006/136733

(56) Documents cités:
- US-A1- 2004 255 156
- ROSENBERG J ET AL: "Getting SIP through Firewalls and NATs" INTERNET DRAFT, 22 février 2000 (2000-02-22), XP002167710

## Description

La présente invention se rapporte au domaine de la voix sur IP (*Internet Protocol*)*.*

La présente invention concerne plus particulièrement un système et un procédé pour sécuriser la téléphonie sur IP. L'invention concerne aussi bien la sécurisation des appels lors de leur établissement et leur vie que la sécurisation des infrastructures du réseau accueillant la téléphonie sur IP.

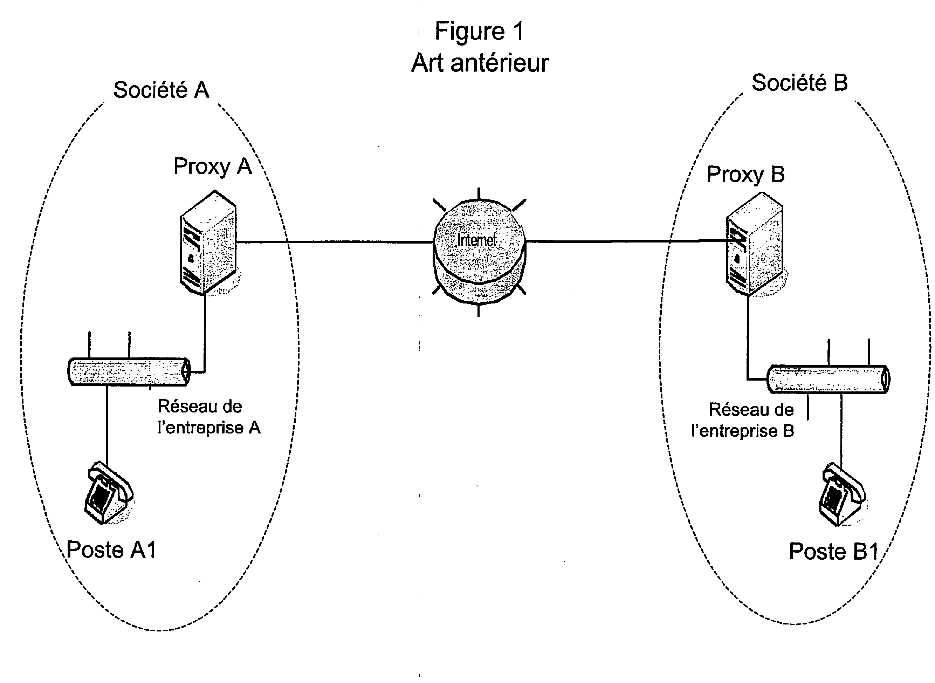

En référence à la figure 1, le contexte de téléphonie sur IP (ToIP) pure se base sur l'existence d'un seul lien entre les sociétés A et B de type réseau en mode paquets, par exemple Internet. Tous les appels entre ces deux sociétés passent donc par ce réseau.

La téléphonie en général met en oeuvre deux flux de données : l'un concerne la signalisation pour l'établissement et la gestion des appels, l'autre concerne le flux média de données à proprement parler, par exemple la voix. À l'heure actuelle, le standard émergeant pour la signalisation de la ToIP est SIP *(Session Initiation Protocol*)*,* protocole de bas niveau servant à initialiser les sessions de communication entre les utilisateurs. On connaît également d'autres protocoles de signalisation comme H.323, MGCP (*Media Gateway Control Protocol*), SS7 (*Signalling System N°7*), ...

Le poste A1 est dans la société A, il utilise un téléphone SIP et est derrière un Proxy SIP qui gère les connexions. Toutes les connexions depuis les téléphones de la société A sortent par la connexion Internet dédiée à la téléphonie ; le poste B1 est dans la société B, utilise un téléphone SIP et est derrière un Proxy SIP qui gère les connexions. Toutes les connexions depuis les téléphones de la société B sortent par la connexion Internet dédiée à la téléphonie.

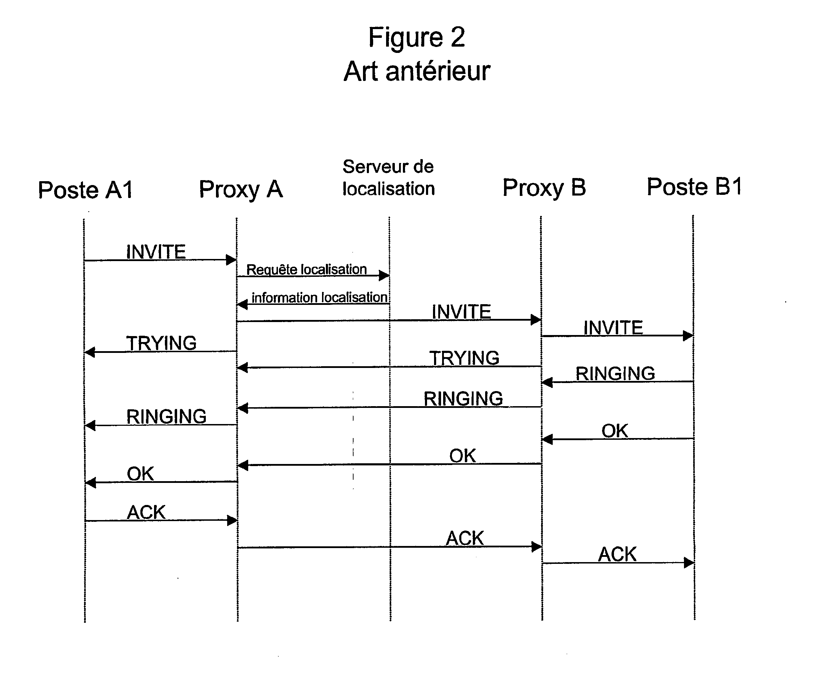

La figure 2 illustre l'établissement d'un appel entre A1 et B1 pour un protocole SIP standard.

A1 décroche son téléphone et émets un appel en direction de B1. Cela a pour effet d'émettre un message de type INVITE depuis le poste A1 en direction du Proxy de la société A. Le Proxy A prend en compte la requête de A1. Comme la demande concerne une zone qui n'est pas gérée par le Proxy A, le Proxy A consulte un serveur de localisation pour obtenir plus d'information sur la zone cible, à savoir le Proxy concerné (Proxy B). Il transmet alors au Proxy B, la requête INVITE.

Pendant ce temps, le Proxy A envoie un message TRYING à A1 pour le prévenir que sa demande a bien été prise en compte.

Le Proxy B ayant reçu la requête du Proxy A la transmet à B1. Pendant ce temps-là, le Proxy B envoie un message TRYING au Proxy A pour le prévenir que la requête est bien prise en compte.

Le poste de B1 a reçu la demande d'appel, et réponds par un message RINGING vers le Proxy de B, lequel propage cette information au Proxy A qui le transmet à son tour au poste A1.

Lorsque l'abonné B1 décroche l'appel, son poste envoie un message OK au Proxy B, lequel le transmet au Proxy A, qui à son tour le transmet au poste A1.

La session de l'appel est alors pleinement établie. Le poste A1 émet un message d'acquittement ACK dirigé vers le poste B1.

Une fois que cet échange SIP a établi l'appel, la main est donnée à un protocole tiers pour le transport du média (voix, vidéo, ...). L'art antérieur connaît plusieurs protocoles tiers dont le plus connu est RTP (*Real-time Transport Protocol).*

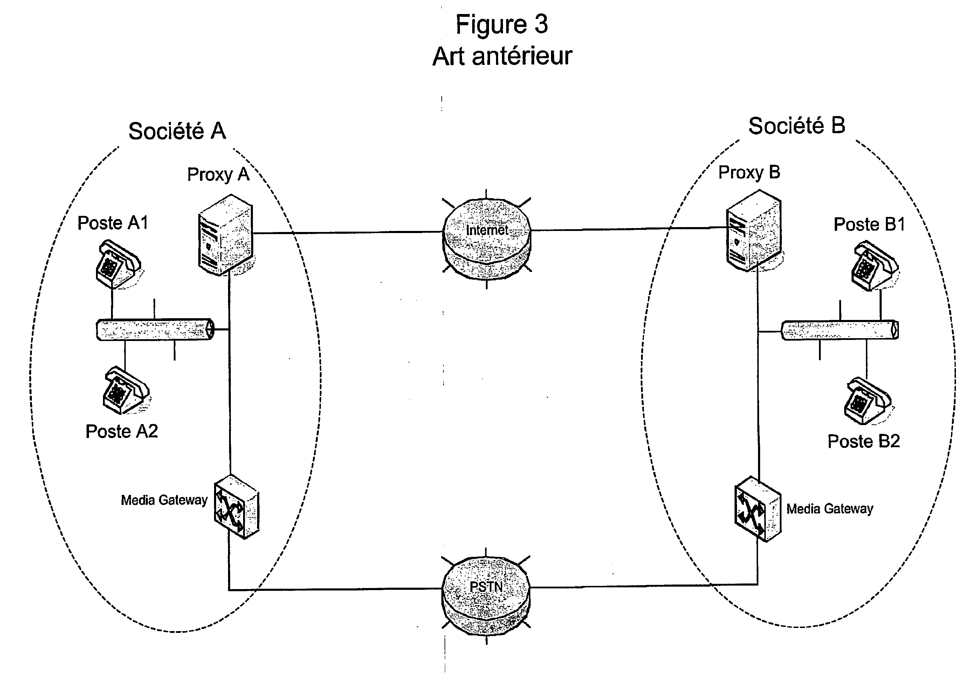

La coexistence d'une téléphonie traditionnelle (réseau commuté) avec une téléphonie sur IP conduit à une convergence des deux types de réseau. En référence à la figure 3, durant la période de migration de la téléphonie vers la téléphonie sur IP, les deux réseaux vont cohabiter. Les entreprises disposent alors d'un double accès, l'un au réseau commuté (PSTN - *Public Switched Telephone Network)* et l'autre au réseau en mode paquets (IP).

Les risques qui résultent d'une telle installation sont donc la combinaison des :
- risques liés à la téléphonie classique ;
- risques liés à la téléphonie sur IP ;
- risques liés à la convergence des deux technologies.

Durant cette période de cohabitation téléphonie classique-téléphonie en mode paquets, il sera donc très important d'apporter une solution répondant aux différentes problématiques.

Un certain nombre de risques sur les appels en téléphonie sur IP a pu être identifié, par exemple :
- garantir l'appel en cours ;
- le déni de service (DoS - *Deny of service*) *:* coupure de communication, modification des caractéristiques de l'appel, harcèlement, attaque sur le proxy, ... ;
- la déviation d'appel ;
- le dépassement de débit (*overflow*) des données média ;

L'art antérieur propose déjà quelques solutions.

Entre autres, on connaît, par la demande de brevet US 6 865 681 (Nokia), un terminal de voix sur IP comprenant un module de gestion de sécurité qui reçoit des paramètres d'authentification des appels, et transmet à la pile de gestion du protocole de signalisation l'autorisation d'établir ces appels. Cette architecture est orientée poste client (téléphones) et à ce titre n'implémente que des mécanismes de sécurité à leur niveau. Cette solution ne répond pas à une optique de contrôle de sécurité sur la globalité d'une infrastructure, postes clients et serveurs compris.

L'art antérieur connaît également, par la demande de brevet WO 01 / 08 377, une solution de sécurisation des connexions d'appels pour voix sur IP dans laquelle les échanges entre les passerelles des différents réseaux internes s'effectuent de façon cryptée après un échange initial de certificat numérique et de clés. Cette solution est figée en ce qu'elle ne vise qu'à sécuriser les données échangées afin d'éviter toute utilisation de celles-ci par une personne malveillante. Cette solution est limitée en ce qu'elle est statique et ne peut tenir compte de nouvelles attaques. On note que cette solution n'est pas dotée d'une approche comportementale pour laquelle des données analysées conduisent à prendre une décision sécuritaire. Une telle approche comportementale apparaît avantageuse car elle permet une évolution et une mise à jour aisées de la sécurité de l'architecture.

L'art antérieur connaît également, par la demande de brevet US 2005 / 27 985, un système et un procédé sécurisant les connexions par des méthodes cryptologiques entre les différents acteurs. La solution est basée sur l'utilisation de clés d'encryptage pour toutes les communications passées entre différents équipements du système. Bien que cette solution sécurise les données pour qu'elles ne puissent pas être exploitées par un intercepteur, elle ne permet pas de faire face à de nombreuses attaques, par exemple celles de type déni de service pour lesquelles un apprentissage et une approche comportementale semblent plus adaptés.

Le document US 2004/255156 décrit un système pour la sécurisation de la téléphonie sur un réseau interne en mode paquets connecté à un réseau externe. Ce système permet de créer de manière dynamique au moins un trou d'épingle dans un pare-feu. Le système de communications comporte un noeud protégé capable de lancer une session de communications avec un noeud extérieur. A cet égard, le noeud protégé peut recevoir des paramètres de débit concernant la session de communications lorsque celle-ci est installée. Le système comporte également un pare-feu placé le long du chemin de communications entre le noeud protégé et le noeud extérieur.

La présente invention entend remédier aux inconvénients de l'art antérieur en proposant un système et un procédé pour sécuriser la téléphonie sur IP. L'invention repose sur l'utilisation d'un superviseur de sécurité à l'intérieur d'une zone démilitarisée, lequel superviseur utilise les données du réseau fournies par des équipements dédiés soit à la téléphonie sur IP (Proxy SIP) soit à la détection de paquets ou données suspects sur le réseau (sonde de détection) et en les comparant à des règles de sécurité afin d'adapter de façon adéquate le comportement des équipements de protection. L'utilisation d'un superviseur central et indépendant dans la gestion du transfert de données et notamment de la téléphonie sur IP, offre une gestion plus aisée de la sécurité, notamment en permettant que celle-ci soit dynamique par l'utilisation de systèmes experts auto-apprenants.

L'invention ne consiste pas en un simple pilotage dans l'ouverture/fermeture de ports de pare-feux, mais dans une gestion plus complexe de la sécurité des appels par voix sur IP.

Le procédé selon la présente invention répond particulièrement bien aux besoins des entreprises pour lesquels la sécurisation des appels mais aussi des infrastructures du réseau IP sont de premier ordre.

À cet effet, l'invention concerne dans son acception la plus générale un système pour la sécurisation de la téléphonie sur un réseau interne en mode paquets connecté à un réseau externe, le système comprenant un pare-feu et un Proxy traitant la signalisation d'appels, tous deux connectés audit réseau interne, caractérisé en ce qu'il comprend, en outre, un superviseur de sécurité connecté audit Proxy et apte à commander ledit pare-feu en réponse à des données transmises par le Proxy.

Dans un mode de réalisation, ledit superviseur comprend une base de données renseignant des règles de sécurité à appliquer audit réseau et des moyens logiciels pour confronter lesdites données reçues aux dites règles de sécurité.

Dans un autre mode de réalisation, ledit superviseur commande l'ouverture et la fermeture des ports dudit pare-feu.

Dans un mode de réalisation particulier, le système comprend, en outre, une sonde IDS connectée au réseau et fournissant des données audit superviseur.

Particulièrement, ladite sonde IDS est dédiée pour la ToIP et remonte audit superviseur les données contenues dans les paquets de signalisation.

Eventuellement, ladite sonde IDS est dédiée pour l'analyse du flux de média et remonte audit superviseur uniquement des informations sur le flux média détecté.

Dans un mode de réalisation, ledit réseau en mode paquets est un réseau IP et les protocoles de téléphonie sont le SIP pour la signalisation et le RTP pour le flux média.

Particulièrement, ledit Proxy comprend des moyens logiciels aptes à remonter des informations sur la signalisation d'appel au superviseur.

Précisément, le système peut comprendre un deuxième pare-feu connecté audit réseau en mode paquets, l'ensemble des deux pare-feux constituant une zone démilitarisée entre le réseau interne et le réseau externe, ledit superviseur commandant également ledit deuxième pare-feu.

Dans un mode de réalisation particulier, ledit réseau externe est un réseau de téléphonie en mode commuté comprenant un autocommutateur, lequel autocommutateur transmet au superviseur des données sur les appels transitant par l'autocommutateur.

Dans un autre mode de réalisation, le système comprend deux sondes IDS à l'intérieur de la zone démilitarisée, les deux sondes étant connectées audit superviseur et associées chacune à un pare-feu.

L'invention concerne également une architecture comprenant un réseau interne en mode paquet relié à un réseau externe par un système de sécurisation selon l'une quelconque des revendications précédentes, et un ensemble de téléphones sur ledit réseau interne, dans laquelle ledit ensemble de téléphones est constitué d'au moins deux sous-ensemble et, lors d'un appel vers ou depuis un desdits téléphones, ledit superviseur tient compte du sous-ensemble d'appartenance du téléphone dans la détermination de la réponse à apporter.

L'invention concerne également une architecture comprenant une pluralité de réseaux internes en mode paquets reliés entre eux par un réseau externe, chaque réseau interne comprenant un système de sécurisation décrit précédemment.

Dans un mode de réalisation, l'architecture comprend, en outre, un serveur de certificats relié audit réseau externe, et en ce que la signalisation transmise entre deux Proxy est un canal sécurisé négocié.

L'invention concerne également un procédé de sécurisation de la téléphonie sur un réseau en mode paquets comprenant un système de sécurisation décrit précédemment, ledit procédé comprenant une étape de transmission des données du Proxy vers ledit superviseur, une étape de confrontation, par le superviseur, desdites données avec des règles de sécurité contenues dans le superviseur et de détermination d'une réponse adaptée, une étape de commande par le superviseur du pare-feu pour appliquer ladite réponse.

On comprendra mieux l'invention à l'aide de la description, faite ci-après à titre purement explicatif, d'un mode de réalisation de l'invention, en référence aux figures annexées :
- la figure 1 illustre le contexte de la téléphonie sur IP de l'art antérieur ;
- la figure 2 représente les échanges lors de l'établissement d'un appel dans le contexte de téléphonie de la figure 1 ;
- la figure 3 illustre le contexte de réseau convergé de l'art antérieur ;
- la figure 4 représente un mode de réalisation de l'architecture de la présente invention ; et
- les figures 5 et 6 illustrent deux exemples de politique sécuritaire mises en oeuvre dans le mode de réalisation de la figure 4.

Dans le mode de réalisation non limitatif de la description, le protocole de signalisation utilisé pour la voix sur IP est le SIP tandis que le protocole de flux media est le RTP.

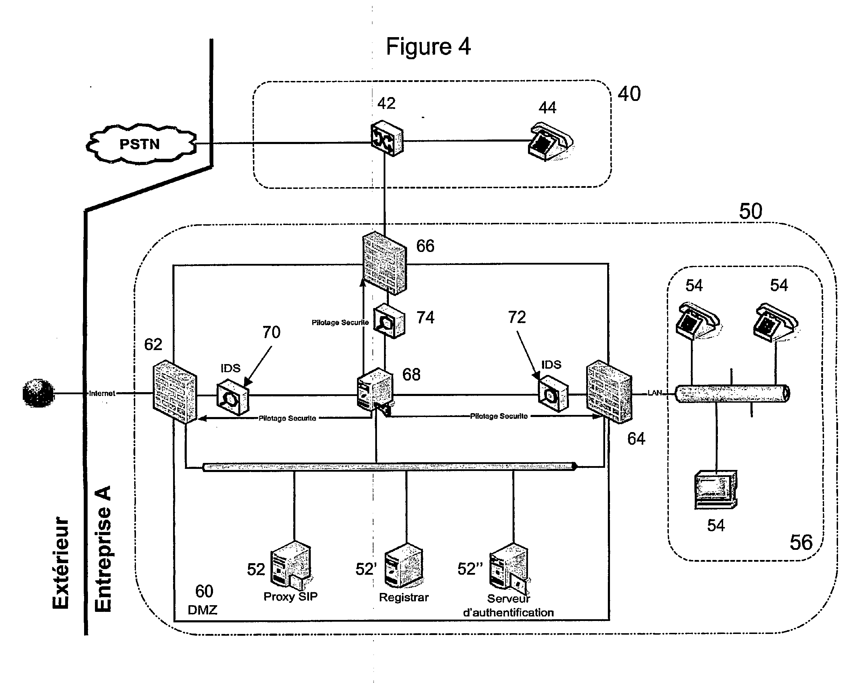

En référence à la figure 4, la société A est reliée à la fois au réseau numérique Internet et au réseau téléphonique public commuté (PSTN) et possède un réseau interne commuté 40 et un réseau IP 50, les deux réseaux étant connectés entre eux.

Le réseau commuté 40 de l'entreprise comprend une passerelle 42 (*media gateway*) vers le réseau IP 50, cette passerelle réalisant la conversion des données du format de l'un des réseaux dans le format de l'autre : du media en mode commuté sur RNIS dans le format RTP pour le réseau IP. Le réseau commuté 40 comprend également une pluralité de téléphones 44 « classiques » connectés au réseau 40. Une communication provenant du réseau commuté PSTN à destination d'un poste « classique » 44 transite via la passerelle 42. Une solution de sécurisation d'un tel réseau commuté a été proposée dans la demande de brevet FR04/52361. Dans cette solution, est proposée la sécurisation de l'autocommutateur d'entreprise : un serveur de sécurisation récupère des données de commutation depuis l'autocommutateur, les confronte à des règles sécuritaires et commande, en fonction de ces dernières, un pare-feu pour neutraliser d'éventuelles attaques. Dans le cadre de la présente invention, la passerelle 42 est entendue comme incluant les moyens de commutation (autocommutateur) et des moyens de mise en oeuvre d'une politique sécuritaire conformément à la demande de brevet FR04/52361.

L'intégration des sondes TDM (*time division multiplexing -* réseau commuté) permet la convergence des données et informations depuis le réseau téléphonique classique. On pourra ainsi détecter les tentatives d'attaques croisées TDM / IP visant à saturer les lignes disponibles. Le système de pare-feu temps réel comme décrit dans la demande de brevet FR04/52361 sera réutilisé pour permettre de gérer les risques spécifiques à l'utilisation d'un réseau commuté.

Les systèmes d'audit des applicatifs PABX décrits dans la demande de brevet FR04/52361 seront réutilisés pour permettre de gérer les risques liés à la fois à la téléphonie classique mais également à la téléphonie sur IP. Les applicatifs seront audités afin de permettre de déterminer les dangers potentiels liés à ces configurations.

Dans le cas d'un appel en provenance (à destination) du réseau PSTN et à destination (provenance) d'un poste téléphonique IP du réseau IP 50, l'appel transite via la passerelle 42, est converti dans le bon format puis est transmis au réseau IP 50.

Pour la mise en oeuvre de la téléphonie sur IP, le réseau IP 50 comporte un Proxy SIP 52 et un ensemble de postes téléphones SIP 54 sur le réseau interne IP 56 de l'entreprise. Lorsqu'un appel s'établit, la partie signalisation est traitée par le Proxy SIP 52, puis le flux media est établi sur le réseau IP jusqu'au poste SIP 54 concerné. Le Proxy SIP 52 peut intégrer directement les fonctions de *Registrar* 52' (enregistre les adresses des postes SIP afin de permettre la localisation de ceux-ci ; utilisé en cas de portabilité de poste pour une même personne) et de serveur d'authentification 52".

Pour la présente invention, le réseau IP 50 comprend une zone démilitarisée 60 en frontal (directement reliée) du réseau externe Internet. Cette zone démilitarisée est reliée aux trois réseaux : externe Internet, interne commuté 40 via la passerelle et interne IP 56.

Cette zone démilitarisée 60 comprend un pare-feu pour chaque liaison avec un réseau externe à la zone :
- Pare-feu 62 vers le réseau externe Internet ;
- Pare-feu 64 vers le réseau interne IP 56 ;
- Pare-feu 66 vers le réseau commuté 40.

Les pare-feux sont implémentés de façon logicielle sur des postes informatiques et permettent de contrôler les échanges de paquets IP en ouvrant ou fermant des ports de communication.

Un superviseur de sécurité 68 est également fourni dans la zone démilitarisée 60. Ce superviseur 68 est relié au réseau 50 et peut commander/piloter les pare-feux 62, 64 et 66. Des sondes de détection d'intrusion 70 et 72 et un pare-feu voix 74 sont également intégrées au réseau IP 50 dans la zone démilitarisée et fournissent des informations au superviseur 68.

Les sondes de détection d'intrusion 70 et 72 analysent l'entête SIP et le corps des messages SIP. À partir de ces données, elles définissent un contexte d'appel qui permet de définir si le paquet est autorisé dans le contexte courant de l'appel.

Ce contexte d'appel est corrélé sur les différentes sondes à travers le superviseur afin que chaque élément de bordure connaisse les contextes des différents appels en cours.

Lors de l'établissement d'un appel, les paquets de signalisation SIP transmis sont reçus par le Proxy SIP 52. Le Proxy 52 est l'élément principal d'une architecture de téléphonie sur IP. A ce titre, il intervient dans l'établissement de toutes les communications. Afin de pouvoir se prémunir contre diverses attaques, on récupère un certain nombre d'informations dans celui-ci pour les transmettre au superviseur 68. Le Proxy 52 intègre donc une couche logicielle supplémentaire à celle habituelle dans ces infrastructures, la nouvelle couche logicielle permettant de mettre à disposition ces informations au superviseur de sécurité 68. Dans certains cas d'attaque, par exemple les attaques dirigées vers le Proxy, il est intéressant que ce soit le Proxy qui réagisse en plus des pare-feux. Le Proxy 68 doit donc pouvoir passer en mode « sécurité » en cas d'attaque massive afin de sauvegarder l'intégrité des communications déjà établies : la couche logicielle comprend alors des règles sécuritaires statiques (par exemple sous forme de paramètres de configuration) qui pourront être appliquées directement sans intervention du superviseur 68.

Les données de signalisation SIP sont également récupérées par les sondes IDS 70 et 72 ou le pare-feu voix 74 qui transmettent le contenu des paquets SIP au superviseur 68. Le pare-feu voix 74 s'occupe de la sécurité de la partie réseau commuté. Pour cela il utilise les données recueillies par la sonde TDM et coupe au besoin les communications sur la *Media Gateway* 42. Dans le cas où un appel passe à travers les deux réseaux (commuté vers IP et IP vers commuté) l'action de sécurité sera menée au niveau du *firewall* 66 depuis le serveur de supervision 68. Le pare-feu 74 se synchronise avec le superviseur de sécurité avant chaque action afin de permettre qu'une seule demande de coupure soit effectuée soit au niveau des *firewall* 66/64/62 soit au niveau de la *Media Gateway* 42 si la communication passe à travers ces deux équipements.

Le superviseur 68 reçoit des informations du Proxy SIP 52, de la passerelle 42 (ou du superviseur de sécurité du réseau commuté comme mentionné précédemment) et éventuellement de sondes de détection d'intrusion 70 et 72, et du pare-feu voix 74. Le superviseur 68 comporte des règles de sécurité dans une base de données ainsi qu'un module de traitement qui confronte les données reçues aux règles. Une description plus précise d'un tel superviseur est fournie dans la demande de brevet FR04/52361, dans laquelle l'homme du métier pourra convertir aisément les informations concernant la téléphonie en mode commuté à la téléphonie sur IP. Comme décrit dans la demande FR04/52361, le superviseur 68 comprend éventuellement un système permettant l'apprentissage de règles de sécurité en fonction de scenarii possibles d'appels. Ce système peut être un système expert.

La réception d'un message INVITE par la sonde du Proxy du domaine protégé se fait par exemple comme suit :

```
     INVITE sip:bob@biloxi.example.com SIP/2.0
  Via: SIP/2.0/UDP ss1.atlanta.example.com:5060;branch=z9hG4bK2d4790.1
  Via: SIP/2.0/UDP client.atlanta.example.com:5060;branch=z9hG4bK74bf9
   ;received=192.0.2.101
  Max-Forwards: 69
  Record-Route: <sip:ss1.atlanta.example.com;lr>
   From: Alice <sip:alice@atlanta.example.com>;tag=9fxced76sl
   To: Bob <sip:bob@biloxi.example.com>
   Call-ID: 2xTb9vxSit55XU7p8@atlanta.example.com
  CSeq: 1 INVITE
   Contact: <sip:alice@client.atlanta.example.com>
   Content-Type: application/sdp
   Content-Length: 151
   v=0
   o=alice 2890844526 2890844526 IN IP4 client.atlanta.example.com
   s=-
   c=IN IP4 192.0.2.101
   t=0 0
   m=audio 49172 RTP/AVP 0
   a=rtpmap:0 PCMU/8000
```

L' extraction des données utiles se fait par exemple comme suit:

```
 MSG TYPE : INVITE
 VIA LIST : ss1.atlanta.example.com;client.atlanta.example.com
 FROM : sip:alice@atlanta.example.com
 TO : sip:bob@biloxi.example.com
 CID : 2xTb9vxSit55XU7p8@atlanta.example.com
 IP : 192.0.2.101
 PORT : 49172
 TYPE : AUDIO
 AUDIO_TYPE : PCMU
```

La règle suivante peut par exemple être appliquée :

```
     SI : Sur une communication arrivant (INVITE)
    le CODEC est interdit sur le lien
    ALORS : Refuser le paquet
      Mettre a jour les données de session sur le proxy
      Demander au firewall de fermer les ports dynamiques de cette
      communication
```

Une autre règle possible après établissement de la communication est décrite ci-dessous :

```
 SI : Sur une communication (CID, FROM, TO) en cours
         un paquet type BYE arrive avec VIA LIST <> de celle du
         paquet INVITE
         ALORS : Refuser le paquet
          Demander au pare feu de bannir l'IP du proxy attaquant.
```

Également, intégré ou non au superviseur 68, un superviseur d'audit permet d'analyser les fonctionnalités du Proxy 52 et des terminaux 54 ainsi que l'architecture du système pour la mise en service de la téléphonie sur IP. Cette analyse permet au superviseur d'audit d'établir des scenarii d'appels qui seront pris en compte par le superviseur 68 pour l'établissement des règles de sécurité.

Par ce traitement sur les données reçues, le superviseur 68 supervise le déroulement des communications et pilote, à des fins sécuritaires, les ouvertures et fermetures de port sur les pare-feux 62, 64 et 66. En cas d'intervention sur l'un des pare-feux, par exemple fermeture d'une communication, le superviseur 68 informe le Proxy 52 de cette intervention afin que celui-ci mette à jour ses données par exemple la liste des communications en cours dans le cas d'un Proxy « *statefull* » (qui mémorise un contexte lié à un utilisateur). Eventuellement, le superviseur informe également la partie commuté (passerelle 42) afin d'informer l'autocommutateur de la fin d'un appel si ce dernier transite par la passerelle pour récupérer les ressources qui ont été attribuées à cet appel.

Voici maintenant quelques mécanismes de sécurisation mis en oeuvre par le superviseur 68 et le Proxy 52.

### Ouverture dynamique des ports media

En fonctionnement, la téléphonie sur IP utilise des ports choisis dynamiquement pour faire passer les flux de média RTP. Pour des raisons de sécurité, ces ports ne doivent pas être ouverts en permanence mais dynamiquement lorsqu'une communication se présente. L'information concernant les ports à ouvrir est contenue dans le corps du message SIP. Le superviseur de sécurité 68 ira donc chercher l'information du port à ouvrir dans le Proxy SIP 52 avant de piloter les pare-feux pour l'ouverture dudit port de communication.

### Garantir la provenance de l'appelant

Le message SIP arrivant au Proxy à la forme :

```
     INVITE sip:callee@domain.com SIP/2.0
     Contact: sip:caller@u1.example.com
     Record-Route: <sip:p1.example.com;1r>
```

On peut déduire de cette présentation que l'appel a été routé à travers un Proxy : le Proxy p1 de *example.com.* Le contact appelant provient également du domaine *example.com.* On peut considérer comme invariant dans le système SIP qu'un appel provenant d'un domaine A provienne d'un Proxy SIP de la même société A.

Par exemple un appel SIP comme suit arrivant au Proxy de *domain.com :*

```
     INVITE sip:callee@domain.com SIP/2.0
     Contact: sip:caller@u1.example.com
     Record-Route: <sip:p1.pirate.com;lr>
```

Le contact appelant provient du domaine *example.com,* et le Proxy qui a transmis la requête provient du domaine *pirate.com.* On peut donc raisonnablement considérer que la requête est dangereuse.

Le superviseur 68 veillera alors à :
- la vérification de la cohérence des *Record-Route* par rapport au domaine de l'appelant,
- la vérification de l'existence d'un Proxy SIP sur la dernière adresse *Record-Route.*

En cas d'incohérence ou d'inexistence, le superviseur interdira l'appel et fermera les ports associés au niveau des pare-feux.

### Garantir l'appel en cours

A réception de la requête INVITE, la démarche de vérification de l'appel entrant doit permet de vérifier que l'appel a bien suivi un chemin cohérent pour atteindre le Proxy SIP 52 de l'entreprise. Il convient alors de vérifier qu'un appel est bien en cours sur l'autre Proxy. Cette fonctionnalité n'étant pas directement implémentée dans SIP, il faut passer par une phase de dialogue propriétaire entre les deux Proxy (des entreprises A et B).

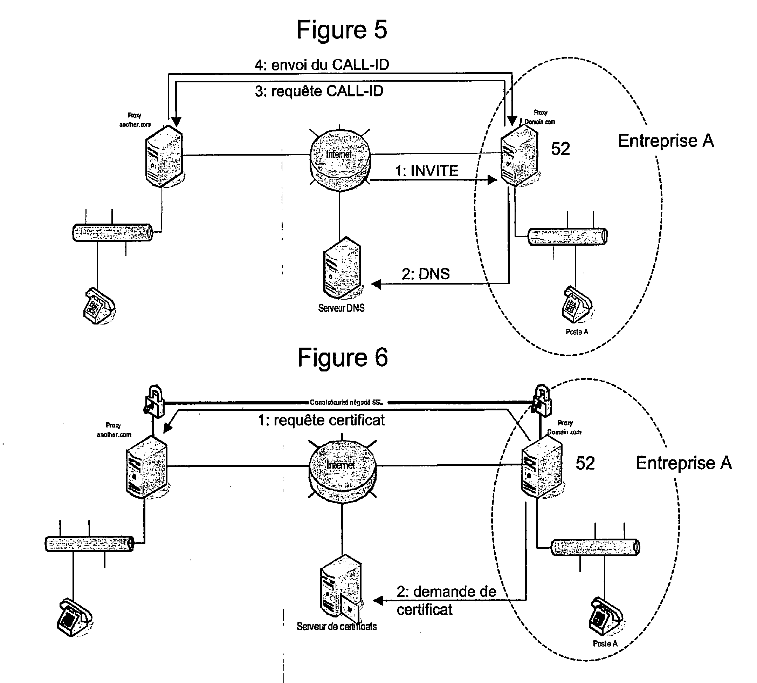

En référence à la figure 5, lorsqu'un appel arrive (1) sur le Proxy 52 du domaine *domain.com,* la requête provenant du domaine *another.com,* le Proxy SIP 52 lance (2) une requête DNS afin de découvrir le Proxy SIP qui gère le domaine de l'appelant (*another.com*)*.*

Après avoir découvert l'adresse du Proxy *another.com* qui gère le domaine de l'appelant, par retour du serveur DNS, une requête est envoyée (3) par le Proxy SIP 52 vers le Proxy découvert en dialogue propriétaire afin de récupérer le CALL-ID correspondant à la personne ayant appelé. Les informations transmises dans cette requête sont :
- Chemin pour envoyer la réponse ;
- Identifiant de la personne appelante.

À réception de la requête, le Proxy *another.com* qui gère le domaine *another. com* envoie (4) la réponse à cette requête et clos le dialogue propriétaire. La réponse contient les informations suivantes :
- Présence ou non d'un(des) appel(s) pour la personne indiquée ;
- Liste des CALL-ID des communications en cours.

Cette vérification permet de valider au superviseur 68 l'ouverture des ports de communication sur les pare-feux pour cet appel.

### Sécuriser le dialogue

Afin de fournir un haut niveau de sécurité, les dialogues propriétaires effectués précédemment doivent être faits à travers un média sécurisé. Pour cela, il est prévu d'utiliser les fonctionnalités SSL pour crypter le canal de communication. Chaque Proxy 52 sécurisé devra faire l'acquisition d'un certificat SSL afin de permettre le bon fonctionnement de cette fonctionnalité.

Une première étape consiste en la récupération du certificat du Proxy distant (1). Ensuite, on procède à la vérification du certificat dont fait état le domaine distant *another.com* : le Proxy 52 émet (2) une requête de demande de certificat *another.com* vers un serveur de certificats.

Ensuite, on négocie un canal sécurisé grâce aux clés de sessions générées précédemment (par les certificats). L'ensemble du dialogue propriétaire peut alors s'effectuer au travers de ce média en toute sécurité.

Éventuellement, on pourra réutiliser les certificats SSL déjà utilisés par certains Proxy SIP.

### Sécuriser contre le déni de service DoS « BYE » de coupure de communication

L'un des principaux problèmes de l'utilisation de SIP est qu'une personne mal intentionnée (reliée au réseau Externe / Interne) peut envoyer des ordres de coupures sur les communications. Les attaques les plus simples consistent à envoyer un ordre de fin de communication (« BYE » ...) afin de demander la fermeture de la communication.

Pour se prémunir de ce genre d'attaque, un certain nombre de vérifications doivent être faites sur le message arrivant pour garantir qui en est l'émetteur :
- Vérifier la cohérence du chemin emprunté ;
- Vérification de l'émetteur du message ;
- Critères cohérents pour entrer dans la zone de sécurité demandée.

Par exemple, une communication SIP est en cours entre deux personnes, une depuis la société A et l'autre depuis la société B. Un message « BYE » arrive au Proxy A avec comme provenance poste-b1@societe-b.com.

Le Proxy A 52 regarde dans un premier temps que le chemin emprunté par le message est cohérent. Si c'est le cas, le Proxy 52 demande à son serveur DNS quel est le Proxy qui gère le domaine societe-b.com. Ensuite il demande à ce Proxy s'il a bien émis une requête de type BYE pour l'appel incriminé. Pour finir, une vérification des critères permettant l'entrée dans la zone en question est effectuée.

### Notion de zones

Dans une entreprise, tous les postes n'ont pas forcément les mêmes besoins en terme de sécurité. Par exemple, le poste d'un directeur est plus problématique que celui d'un chef de projet, qui est lui-même plus problématique que celui d'une secrétaire.

Pour répondre à ce problème, il est prévu, dans la présente invention, de créer des niveaux de sécurité pour qualifier le niveau de sûreté des appels entrants et sortants. Ainsi sont créées des zones de sécurité qui classent les postes suivant la criticité qu'ils représentent. Les niveaux de sécurité proposés par défaut seront :
- Faible ;
- Normale ;
- Maximum.

Les zones de sécurité proposées par défaut sont :
- Normale ;
- Critique ;
- Hautement critique.

La politique de sécurité de l'entreprise correspond donc à définir le niveau de sécurité requis pour entrer dans une zone donnée. Pour qualifier cela, des matrices telles que celle ci-dessous sont utilisées :

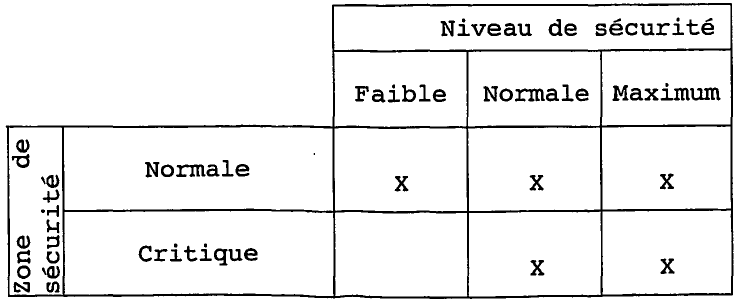

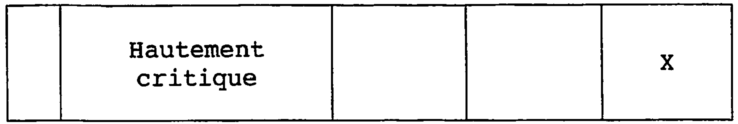

Ces matrices sont à définir par l'utilisateur et constituent la base de la politique de sécurité de l'entreprise. Ces matrices ainsi définies, on pourra définir les actions à engendrer suivant les différents cas de figure qui pourront se présenter, par exemple les appels n'ayant pas un assez haut niveau afin d'atteindre la zone demandée.

Appels n'ayant pas un niveau suffisant pour atteindre leur destinataire :
- Dévier vers l'opératrice de la zone concernée ;
- Envoyer sur la messagerie vocale de la personne ;
- Faire des déviations spécifiques (Patron /Secrétaire) ;
- Refuser l'appel ;
- Lecture d'un message explicatif.

### Sécuriser contre le déni de service DoS « REINVITE »

De la même façon qu'un pirate peut envoyer des messages pour couper les communications en cours, il peut envoyer un message « REINVITE » afin de modifier les caractéristiques de la communication en cours de route. Il peut par exemple passer le type de communication d'audio à vidéo ou autre ...

On appliquera les mêmes critères que précédemment pour vérifier que le message émane bien de la personne qui est en cours de communication :
- Cohérence du chemin emprunté ;
- Vérification de l'émetteur du message ;
- Critères cohérents pour entrer dans la zone de sécurité demandée.

La politique de sécurité permet de définir si les requêtes « REINVITE » sont autorisées ou non et si oui dans quelle zone de sécurité elles le sont.

### Éviter la déviation d'appel

Lors de la réception d'un message « INVITE » pour démarrer un appel, il est possible d'envoyer un message dit « 3xx » pour signaler que l'appelé est joignable à un autre endroit. Cette fonction peut-être détournée par des pirates afin d'intercepter des appels et de les rediriger vers d'autres postes.

La politique de sécurité mise en oeuvre par le superviseur 68 permettra de définir si les messages « 3x »x sont autorisés ou non et si oui dans quelle zone de sécurité il le sont. On définit également s'il est possible de dérouter des appels vers l'extérieur (cas d'un domaine différent, d'une localisation différente ...). Ces informations sont contenues dans les règles de sécurité du superviseur 68.

### Sécuriser contre le déni de service DoS de harcèlement

Une attaque de harcèlement est très facile à réaliser dans une architecture de téléphonie sur IP. On peut presque l'assimiler au problème du *spam* (pourriel) dans le cas des mails.

Pour résoudre ce problème on effectue un calcul statistique sur :
- le nombre d'appel arrivant sur une période ;
- le temps de repos entre deux appels ;
- la provenance des appels.

Ces données permettent au superviseur 68 de refuser les appels de type harcèlement qui proviennent d'une seule et même source. Si la source est diversifiée, il faut attendre de connaître les différentes sources d'attaques avant de pouvoir toutes les bloquer.

Une alternative de réaction consiste à dévier vers une opératrice ou vers la messagerie pendant une période donnée, tous les appels arrivant vers une cible, dès qu'un appel de harcèlement est détecté sur un poste.

### Sécuriser contre le déni de service DoS sur le Proxy

Une attaque de déni de service dirigée vers le Proxy 52 va essayer de générer un trafic trop important pour être géré par l'architecture SIP. Pour cela, un certain nombre d'attaques sont possibles s'attaquant chacune à une fonctionnalité particulière du Proxy.

Les schémas de détection de l'attaque peuvent être :
- Grand nombre d'ouverture de connexion ;
- Appels générés vers des utilisateurs n'existant pas ;

Pour se prémunir de ce genre d'attaque, une sonde IDS 70 dédiée ToIP (*Telephony over IP*) est placée en amont du Proxy 52. L'IDS 70 associé au superviseur 68 permet de détecter un accroissement anormal des communications dirigées vers des utilisateurs n'existant pas ou selon d'autres critères.

Eventuellement, un calcul statistique permet de définir si l'accroissement du nombre de connexions reste dans l'utilisation normale ou non.

### Sécuriser contre le déni de service DoS sur le Registrar

Comme précisé précédemment, le *Registrar* 52' maintient la liste des utilisateurs actuellement connectés et l'emplacement où l'on peut les trouver afin de savoir à chaque instant où se trouve une personne donnée. Les pirates tentent d'attaquer ce service en particulier. En effet, comme n'importe quel élément d'une installation informatique, celui-ci à une limite en terme de capacité de traitement. Ainsi si l'on génère un grand nombre de demandes d'enregistrement, on peut arriver à saturer la mémoire qui gère ces connexions ; les requêtes provenant de téléphones réels ne sont alors plus traitées.

La sécurisation consiste à ce que le Proxy 52 limite le nombre d'enregistrement provenant d'une même adresse source pendant un temps donné. Par exemple, on limite à cinq messages « REGISTER » (message utilisé pour modifier les données du *Registrar* 52') pour une période d'une minute.

### Sécuriser contre l'overflow du flux media (Flood RTP)

Dans le cas où une communication est établie, le flux de média qui transporte la voix est un flux RTP. Ce flux évolue en continue et ne traverse pas le Proxy. L'attaque par *flood RTP* consiste à insérer des flux supplémentaires à ceux qui sont logiquement contenus dans les paquets RTP afin de perturber la réception du flux.

Pour se prémunir contre une telle attaque, on placera une sonde IDS 72 sur le trajet du flux média. Cette sonde IDS remonte au superviseur 68 des données sur la taille des paquets RTP qui transitent et l'ordre d'arrivée des paquets. L'analyse temporelle de ces paquets et donc du flux média permet de définir si la taille du flux et l'enchaînement des paquets sont bien corrélés avec le *codec* (algorithme de codage) utilisé pour encoder la voix. En cas d'incohérence, le superviseur 68 commande la fermeture de l'appel. En effet, pour chaque *codec* on peut définir une taille normale de données échangées sur une période donnée, par exemple 64 kbit/s pour G711 ainsi qu'un ordre logique d'arrivée des paquets. En laissant une marge de sécurité autour de ces valeurs, on peut donc détecter l'insertion de flux malicieux à l'intérieur du flux RTP.

## Revendications

1. Système de sécurisation de la téléphonie sur un réseau interne (56) en mode paquets connecté à un réseau externe, le système comprenant un pare-feu (62 ;66) et un proxy (52) traitant des données de signalisation d'appels,
tous deux connectés audit réseau interne (56), **caractérisé en ce que** le pare-feu (62 ; 66) et le proxy (52) font partie d'une zone démilitarisée (60) entre le réseau interne (56)en mode paquet et le réseau externe **en ce que** le système comprend, en outre, au moins une sonde IDS (70, 72), système de détection d'intrusion, disposée sur le flux de données du réseau et apte à traiter des données transitant sur ledit réseau interne, et un superviseur de sécurité (68) connecté audit réseau interne (56), ledit superviseur de sécurité (68) comprenant une pluralité de règles de sécurité, et **en ce que** ledit superviseur de sécurité (68) est apte à recevoir des données de signalisation d'appels traitées par ledit proxy (52) et des données de flux traitées par ladite sonde IDS (70,72), à appliquer lesdites règles aux données traitées reçues et à commander ledit pare-feu (62 ; 66) pour l'ouverture et la fermeture de ports en fonction de l'application desdites règles aux données traitées reçues.

2. Système selon la revendication précédente, **caractérisé en ce que** ladite sonde IDS (70) est dédiée pour la ToIP et transmet audit superviseur (68) des données contenues dans les paquets de signalisation.

3. Système selon la revendication 1, **caractérisé en ce que** ladite sonde IDS (70) est dédiée pour l'analyse du flux de média et transmet audit superviseur (68) des données relatives aux paquets du flux média détecté.

4. Système selon la revendication 1, **caractérisé en ce que** ledit réseau interne (56) en mode paquets est un réseau IP et les protocoles de téléphonie sont le SIP pour la signalisation et le RTP pour le flux média.

5. Système selon la revendication 1, **caractérisé en ce que** ledit proxy (52) comprend des moyens logiciels aptes à transmettre lesdites données traitées de signalisation d'appel au superviseur (68).

6. Système selon la revendication 1, caractérisé en ce la zone démilitarisée (60) comporte un deuxième pare-feu (64) connecté audit réseau interne en mode paquets (56), ledit superviseur de sécurité (68) commandant également ledit deuxième pare-feu (64).

7. Système selon la revendication précédente, **caractérisé en ce que** ledit réseau externe est un réseau de téléphonie en mode commuté comprenant un autocommutateur, lequel autocommutateur transmet au superviseur (68) des données sur les appels transitant par l'autocommutateur.

8. Système selon la revendication 6, **caractérisé en ce qu'**il comprend deux sondes IDS (70, 72) à l'intérieur de la zone démilitarisée (60), les deux sondes étant connectées audit superviseur (68) et associées chacune à un pare-feu (62, 64).

9. Architecture comprenant un réseau interne (56) en mode paquet relié à un réseau externe par un système de sécurisation selon l'une quelconque des revendications précédentes, et un ensemble de téléphones (54) sur ledit réseau interne (56), **caractérisé en ce que** ledit ensemble de téléphones (54) est constitué d'au moins deux sous-ensembles et **en ce que**, lors d'un appel vers ou depuis un desdits téléphones (54), ledit superviseur (68) tient compte du sous-ensemble d'appartenance du téléphone dans la détermination de la réponse à apporter.

10. Architecture comprenant une pluralité de réseaux internes en mode paquets reliés entre eux par un réseau externe, chaque réseau interne comprenant un système de sécurisation selon l'une quelconque des revendications 1 à 8.

11. Architecture selon la revendication 10, **caractérisée en ce qu'**elle comprend, en outre, un serveur de certificats relié audit réseau externe, et **en ce que** la signalisation transmise entre deux proxy est un canal sécurisé négocié.

## Claims

1. A system for telephony securing on an internal packet data network (56) connected to an external network, the system comprising a firewall (62; 66) and a proxy (52) processing call signaling data, both connected to said internal network (56), **characterized in that** the firewall (62; 66) and the proxy (52) are part of a demilitarized zone (60) between the internal packet data network (56) and the external network, **in that** the system further comprises at least one IDS (intrusion detection system) probe (70, 72) arranged on the data stream of the network and capable of processing data passing through said internal network, and a security executive (68) connected to said internal network (56), said security executive (68) comprising a plurality of security rules, and **in that** said security executive (68) is capable of receiving call signaling data processed by said proxy (52) and flow data processed by said IDS probe (70, 72), applying said rules to the received processed data, and commanding said firewall (62; 66) to open and close ports according to the application of said rules to the received processed data.

2. The system according to the preceding claim, **characterized in that** said IDS probe (70) is dedicated to ToIP and transmits data contained in the signaling packets to said executive (68).

3. The system according to claim 1, **characterized in that** said IDS probe (70) is dedicated to analyzing the media flow and transmits data relative to the packets of the detected media flow to said executive (68).

4. The system according to claim 1, **characterized in that** said internal packet data network (56) is an IP network and the telephone protocols are SIP for signaling and RTP for the media flow.

5. The system according to claim 1, **characterized in that** said proxy (52) comprises software means capable of transmitting said processed call signaling data to the executive (68).

6. The system according to claim 1, **characterized in that** the demilitarized zone (60) includes a second firewall (64) connected to said internal packet data network (56), said security executive (68) also commanding said second firewall (64).

7. The system according to the preceding claim, **characterized in that** said external network is a switched telephone network comprising a switch, said switch transmitting data on the calls passing through the switch to the executive (68).

8. The system according to claim 6, **characterized in that** it comprises two IDS probes (70, 72) within the demilitarized zone (60), the two probes being connected to said executive (68) and each associated with a firewall (62, 64).

9. An architecture comprising an internal packet data network (56) connected to an external network by a securing system according to any one of the preceding claims, and a set of telephones (54) on said internal network (56), **characterized in that** said set of telephones (54) is made up of at least two subset and **in that**, when there is a call to or from one of said telephones (54), said executive (68) accounts for the subset to which the telephone belongs in determining the appropriate response.

10. An architecture comprising a plurality of internal packet data networks connected to each other by an external network, each internal network comprising a securing system according to any one of claims 1 to 8.

11. The architecture according to claim 10, **characterized in that** it further comprises a certificate server connected to said external network, and **in that** the signaling transmitted between two proxies is a secure negotiated channel.

## Patentansprüche

1. Sicherungssystem der Telefonie über ein internes Netz (56) im Paketmodus, das mit einem externen Netz verbunden ist, wobei das System eine Firewall (62; 66) und einen Proxy (52) zur Verarbeitung der Anrufsignalisationsdaten umfasst, wobei beide mit dem internen Netz (56) verbunden sind, **dadurch gekennzeichnet, dass** die Firewall (62; 66) und der Proxy (52) Teil einer entmilitarisierten Zone (60) zwischen dem internen Netz (56) im Paketmodus und dem externen Netz sind, dass das System ferner mindestens eine IDS-Sonde (70, 72) als System zur Erkennung von Intrusionen, die über dem Datenfluss des Netzes angeordnet ist und imstande, Daten, die über das interne Netz fließen, zu verarbeiten, und einen Sicherheitssupervisor (68), der mit dem internen System (56) verbunden ist, umfasst, wobei der Sicherheitssupervisor (68) eine Vielzahl von Sicherheitsregeln umfasst, und dass der Sicherheitssupervisor (68) imstande ist, Anrufsignalisationsdaten zu empfangen, die von dem Proxy (52) verarbeitet wurden, und Flussdaten, die von der IDS-Sonde (70, 72) verarbeitet wurden, die Regeln auf empfangene verarbeitete Daten anzuwenden und der Firewall (62; 66) in Abhängigkeit von der Anwendung der Regeln auf die empfangenen verarbeiteten Daten das Öffnen oder Schließen von Ports zu befehlen.

2. System nach vorangehendem Anspruch, **dadurch gekennzeichnet, dass** die IDS-Sonde (70) für die ToIP bestimmt ist und dem Supervisor (68) in den Signalisationspaketen enthaltene Daten übermittelt.

3. System nach Anspruch 1, **dadurch gekennzeichnet, dass** die IDS-Sonde (70) für die Analyse des Medienflusses bestimmt ist und dem Supervisor (68) Daten übermittelt, die sich auf Pakete des ermittelten Medienflusses beziehen.

4. System nach Anspruch 1, **dadurch gekennzeichnet, dass** das interne Netz (56) im Paketmodus ein IP-Netz ist und die Telefonieprotokolle das SIP für die Signalisierung und das RTP für den Medienfluss sind.

5. System nach Anspruch 1, **dadurch gekennzeichnet, dass** der Proxy (52) Softwaremittel umfasst, die imstande sind, die verarbeiteten Anrufsignalisationsdaten an den Supervisor (68) zu übertragen.

6. System nach Anspruch 1, **dadurch gekennzeichnet, dass** die entmilitarisierte Zone (60) eine zweite Firewall (64) aufweist, die mit dem internen Netz im Paketmodus (56) verbunden ist, wobei der Sicherheitssupervisor (68) ebenfalls die zweite Firewall (64) steuert.

7. System nach vorangehendem Anspruch, **dadurch gekennzeichnet, dass** das externe Netz ein Telefonienetz im Wahlmodus ist, das eine Vermittlungseinrichtung umfasst, wobei die Vermittlungseinrichtung dem Supervisor (68) Daten über die Anrufe überträgt, die über die Vermittlungseinrichtung laufen.

8. System nach Anspruch 6, **dadurch gekennzeichnet, dass** es in der entmilitarisierten Zone (60) zwei IDS-Sonden (70, 72) umfasst, wobei die zwei Sonden mit dem Supervisor (68) verbunden sind und jede einer Firewall (62, 64) zugeordnet ist.

9. Architektur, die ein internes Netz (56) im Paketmodus, das durch ein Sicherungssystem nach einem der vorangehenden Ansprüche mit einem externen Netz verbunden ist, und eine Telefongruppe (54) über dem internen Netz (56) umfasst, **dadurch gekennzeichnet, dass** die Telefongruppe (54) von mindestens zwei Untergruppen gebildet wird und dass der Supervisor (68) bei einem Anruf zu oder von einem der Telefone (54) bei der Bestimmung der zu gebenden Antwort die Untergruppe der Zugehörigkeit des Telefons berücksichtigt.

10. Architektur, die eine Vielzahl interner Netze im Paketmodus umfasst, die untereinander durch ein externes Netz verbunden sind, wobei jedes interne Netz ein Sicherungssystem nach einem der Ansprüche 1 bis 8 umfasst.

11. Architektur nach Anspruch 10, **dadurch gekennzeichnet, dass** sie ferner einen Zertifikatserver umfasst, der mit dem externen Netz verbunden ist, und dass die zwischen zwei Proxys übermittelte Signalisierung ein verhandelter abgesicherter Kanal ist.
